(19) Europäisches Patentamt / European Patent Office / Office européen des brevets

(11) **EP 4 170 864 A1**

(12) **EUROPÄISCHE PATENTANMELDUNG**

(43) Veröffentlichungstag:
**26.04.2023 Patentblatt 2023/17**

(21) Anmeldenummer: 22201302.1

(22) Anmeldetag: **13.10.2022**

(51) Internationale Patentklassifikation (IPC):
*H02J 50/12* (2016.01)    *H02J 50/80* (2016.01)

(52) Gemeinsame Patentklassifikation (CPC):
**H02J 50/12; H02J 50/80**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **19.10.2021 DE 102021211806**

(71) Anmelder: **E.G.O. Elektro-Gerätebau GmbH
75038 Oberderdingen (DE)**

(72) Erfinder:
• **Egenter, Christian
75015 Bretten (DE)**
• **Müller, Max-Felix
75038 Oberderdingen (DE)**
• **Bellm, Mathias
76698 Ubstadt-Weiher (DE)**
• **Wächter, Ulrich
76646 Bruchsal (DE)**

(74) Vertreter: **Patentanwälte
Ruff, Wilhelm, Beier, Dauster & Partner mbB
Kronenstraße 30
70174 Stuttgart (DE)**

(54) **VERFAHREN ZUM BETREIBEN EINES KI-SYSTEMS**

(57)      Verfahren zum Betreiben eines Systems aufweisend eine Vorrichtung (100) zum drahtlosen Übertragen von Energie in Richtung eines elektrischen Verbrauchers (200) mittels induktiver Kopplung und einen elektrischen Verbraucher (200),
- wobei die Vorrichtung (100) aufweist:
- einen Gleichrichter (108) zum Erzeugen einer Gleichspannung (U_S) aus einer Netzspannung (U_N),
- einen aus der Gleichspannung (U_S) gespeisten Wechselrichter (102), der dazu ausgebildet ist, ein pulsweitenmoduliertes Ansteuersignal (A_S) zu erzeugen,
- eine mittels des pulsweitenmodulierten Ansteuersignals (A_S) angesteuerte Leistungsspule (101), mittels der zum Übertragen der Energie ein magnetisches Wechselfeld erzeugbar ist,
- eine Kommunikationseinrichtung (111), die dazu ausgebildet ist, Daten bidirektional mit dem elektrischen Verbraucher (200) auszutauschen, und
- einen Regler (116), der dazu ausgebildet ist, eine von dem Wechselrichter (102) abgegebene Leistung auf einen vorgebbaren Sollwert zu regeln, und

- wobei der elektrische Verbraucher (200) aufweist:
- eine Schalteinrichtung (203) zur Veränderung einer Last-Impedanz des elektrischen Verbrauchers (200), und
- eine Kommunikationseinrichtung (206), die dazu ausgebildet ist, Daten bidirektional mit der Vorrichtung (100) auszutauschen,

wobei das Verfahren die Schritte aufweist:

- Synchronisieren des Betriebs der Vorrichtung (100) und des Betriebs des elektrischen Verbrauchers (200) derart, dass während einer Veränderung der Last-Impedanz des elektrischen Verbrauchers (200) eine Übergangs-Frequenz und/oder ein Übergangs-Tastgrad des pulsweitenmodulierten Ansteuersignals (A_S) derart eingestellt wird/werden, dass in dem elektrischen Verbraucher (200) bewirkte Spannungen (U_1) und/oder Ströme vorgegebene Schwellenwerte nicht überschreiten und/oder unterschreiten.

Fig. 1

**Beschreibung**

Der Erfindung liegt die Aufgabe zugrunde, ein Verfahren zum Betreiben eines Systems aufweisend eine Vorrichtung zum drahtlosen Übertragen von Energie in Richtung eines elektrischen Verbrauchers mittels induktiver Kopplung und einen elektrischen Verbraucher und ein entsprechendes System zur Verfügung zu stellen, die einen möglichst zuverlässigen Betrieb des Systems, insbesondere bei einer Veränderung der Last-Impedanz des elektrischen Verbrauchers, ermöglichen.

Das Verfahren dient zum Betreiben eines Systems aufweisend eine Vorrichtung zum drahtlosen Übertragen von Energie in Richtung eines elektrischen Verbrauchers mittels induktiver Kopplung, auch als Wireless Power Transfer, WPT, bezeichnet, und einen elektrischen Verbraucher. Hinsichtlich der Grundlagen zu WPT sei auch auf die einschlägige Fachliteratur verwiesen. Bevorzugt wird das System gemäß dem WPC (Wireless Power Consortium) Ki (Cordless Kitchen) Verfahren betrieben. Die Vorrichtung zum drahtlosen Übertragen von Energie in Richtung eines elektrischen Verbrauchers mittels induktiver Kopplung kann auch als Transmitter bezeichnet werden und der elektrische Verbraucher kann als Receiver bezeichnet werden.

Die Vorrichtung weist einen herkömmlichen einphasigen oder mehrphasigen Gleichrichter zum Erzeugen einer Gleichspannung aus einer insbesondere sinusförmigen Netzspannung auf.

Die Vorrichtung weist einen aus der Gleichspannung gespeisten Wechselrichter auf. Der Wechselrichter kann beispielsweise ein Halbbrücken-Wechselrichter oder ein Vollbrücken-Wechselrichter sein. Der Wechselrichter ist dazu ausgebildet, ein pulsweitenmoduliertes Ansteuersignal mit einstellbarer Frequenz und/oder einstellbarem Tastgrad zu erzeugen.

Die Vorrichtung weist eine herkömmliche mittels des Wechselrichters angesteuerte Leistungsspule oder Transmitterspule auf, die dazu ausgebildet ist, zum Übertragen der Energie ein magnetisches Wechselfeld zu erzeugen. Hierzu wird mittels des Wechselrichters ein, insbesondere periodisches, Ansteuersignal, insbesondere in Form einer Ansteuerspannung, erzeugt und die Leistungsspule oder ein die Leistungsspule aufweisender Schwingkreis wird mit dem Ansteuersignal angesteuert bzw. beaufschlagt. Das Ansteuersignal weist typisch einen von einem Leistungs-Sollwert abhängigen bzw. zu dem Leistungs-Sollwert passenden Arbeitspunkt auf. Ein Arbeitspunkt bezeichnet hierbei insbesondere eine oder mehrere Eigenschaften des Ansteuersignals, beispielsweise Amplitude, Tastgrad und/oder Frequenz des Ansteuersignals.

Die Vorrichtung weist eine Kommunikationseinrichtung auf, die dazu ausgebildet ist, Daten bidirektional mit dem elektrischen Verbraucher auszutauschen.

Die Vorrichtung weist weiter einen Regler auf, der dazu ausgebildet ist, eine von dem Wechselrichter abgegebene Leistung auf einen vorgebbaren (Leistungs-) Sollwert zu regeln. Als Stellgrößer des Reglers bzw. der Regelung kann/können beispielsweise eine Frequenz und/oder ein Tastgrad des Ansteuersignals dienen.

Der elektrische Verbraucher weist eine Schalteinrichtung zur Veränderung einer Last-Impedanz des elektrischen Verbrauchers auf. Die Last-Impedanz des elektrischen Verbrauchers kann sich durch zu-/abschaltbare elektrische Lasten des elektrischen Verbrauchers sehr schnell ändern. Solche schaltbare elektrische Lasten können beispielsweise direkt mit einer induzierten Wechselspannung und/oder hinter einem Gleichrichter betrieben werden.

Der elektrische Verbraucher weist eine Kommunikationseinrichtung auf, die dazu ausgebildet ist, Daten bidirektional mit der Vorrichtung auszutauschen.

Erfindungsgemäß wird der Betrieb der Vorrichtung und der Betrieb des elektrischen Verbrauchers derart miteinander synchronisiert, dass vor bzw. während einer Veränderung der Last-Impedanz des elektrischen Verbrauchers eine Übergangs-Frequenz und/oder ein Übergangs-Tastgrad des pulsweitenmodulierten Ansteuersignals derart eingestellt wird/werden, dass in dem elektrischen Verbraucher bewirkte Spannungen und/oder Ströme vorgegebene Schwellenwerte nicht überschreiten und/oder unterschreiten.

In einer Ausführungsform wird während der Veränderung der Last-Impedanz des elektrischen Verbrauchers der Regler deaktiviert.

In einer Ausführungsform wird/werden die Übergangs-Frequenz und/oder der Übergangs-Tastgrad derart eingestellt, dass eine in dem elektrischen Verbraucher bewirkte Spannung unabhängig von der Last-Impedanz des elektrischen Verbrauchers kleiner als oder gleich wie eine Nennspannung des elektrischen Verbrauchers bleibt. Die Nennspannung kann beispielsweise 230 V oder 110 V betragen.

In einer Ausführungsform wird für Kopplungsfaktoren zwischen der Vorrichtung und dem elektrischen Verbraucher von $\leq 0{,}45$ die Übergangs-Frequenz $\geq 40$ kHz eingestellt, und für Kopplungsfaktoren zwischen der Vorrichtung und dem elektrischen Verbraucher von > 0,45 bis 0,8 wird die Übergangs-Frequenz $\geq 50$ kHz eingestellt. Optional kann der Tastgrad von beispielsweise 50% auf kleinere Werte reduziert werden, um auch in Sonderfällen in jedem Fall eine Spannung kleiner als die Nennspannung zu induzieren. Hinsichtlich der Definition der Kopplungsfaktoren sei auf die einschlägige Fachliteratur verwiesen.

Alternativ wird die Übergangsfrequenz auf Null Hz eingestellt, d.h. der Wechselrichter wird temporär deaktiviert bzw. ausgeschaltet.

In einer Ausführungsform weist das Verfahren folgende Schritte auf: a) Übertragen von Daten vom elektrischen Verbraucher zur Vorrichtung, wobei die Daten anzeigen, dass der elektrische Verbraucher eine Veränderung seiner elektrischen Last-Impedanz wünscht/plant, b) danach, Übertragen von Daten von der Vorrichtung zum elektrischen Verbraucher, wobei die Daten anzeigen, dass die Daten des elektrischen Verbrauchers von der Vorrichtung empfangen worden sind, und Deaktivieren des Reglers und Einstellen der Übergangs-Frequenz und/oder des Übergangs-Tastgrads, c) danach, Ändern der Last-Impedanz des elektrischen Verbrauchers und Übertragen von Daten vom elektrischen Verbraucher zur Vorrichtung, wobei die Daten anzeigen, dass der elektrische Verbraucher seine Last-Impedanz verändert hat, und d) danach, Aktivieren des Reglers und Regeln einer von dem Wechselrichter abgegebenen elektrischen Leistung auf einen stationären Sollwert.

In einer Ausführungsform enthalten die im Schritt a) vom elektrischen Verbraucher zur Vorrichtung übertragenen Daten zusätzlich einen gewünschten Sollwert, wobei im Schritt d) der stationäre Sollwert in Abhängigkeit von dem gewünschten Sollwert eingestellt wird, insbesondere dem gewünschten Sollwert entspricht.

In einer Ausführungsform enthalten die im Schritt a) vom elektrischen Verbraucher zur Vorrichtung übertragenen Daten zusätzlich Informationen bzw. einen Wert, der die Last-Impedanz nach dem Lastwechsel kennzeichnet. Dieser Wert beschreibt unabhängig vom gewünschten Sollwert beispielsweise den Widerstand bzw. die Last-Impedanz, beispielsweise als Receiver-Güte Q_PRx.

In einer Ausführungsform werden Daten zwischen dem elektrischen Verbraucher und der Vorrichtung in einem Zeitbereich um einen Nulldurchgang der Netzspannung herum übertragen.

Das erfindungsgemäße System weist eine oben beschriebene Vorrichtung und einen oben beschriebenen elektrischen Verbraucher auf, die zur Durchführung des erfindungsgemäßen Verfahrens ausgebildet sind.

Bei den nachfolgenden Erläuterungen wird die Vorrichtung zum drahtlosen Übertragen von Energie in Richtung des elektrischen Verbrauchers mittels induktiver Kopplung als Transmitter bezeichnet und der elektrische Verbraucher wird als Receiver bezeichnet.

Die Erfindung dient insbesondere zur Energieversorgung von kabellosen Receivern in Form von Küchengeräten gemäß Ki-Standard. Die Erfindung ermöglicht ein schnelles, synchronisiertes Schalten der Last-Impedanz im Receiver und der Leistung im Transmitter mit geringen Auswirkungen auf die induzierte Lastspannung im Receiver unter sicherer Vermeidung von Überspannungen dank der jeweiligen Bestätigungen der Gegenseite. Im Normalfall muss nur eine Halbwelle der Netzspannung die Leistungszufuhr unterbrochen oder eingeschränkt werden.

Die Ki-Spezifikation soll Geräte mit mehreren Lastelementen unterstützen, beispielsweise so genannte Airfryer mit einem oder zwei schaltbaren Heizwiderständen sowie einem Lüfter, der durchgehend die Luft umwälzen soll, solange der Airfryer in Betrieb ist.

Ändert sich die Last-Impedanz

$$Z_{Last} = \frac{U\_Last}{I\_Last}$$ aufgrund eines Zu- bzw. Abschaltens eines Lastelements, so wirkt dies auf die Leistungsübertragung zurück und die Übertragungsfunktion P(f) ändert sich.

Arbeitet der Transmitter an einem Arbeitspunkt mit einer Frequenz f_op_1 und mit einem Tastgrad DC_op_1 passend zu einer Soll-Leistung P_soll_1 mit einer Lastspannung U_Last_1r, dann erhöht sich die im Receiver induzierte Spannung beim Erhöhen der Last-Impedanz durch Abschalten einer Teil-Last-Impedanz in sehr vielen Fällen sprungartig auf größere bzw. kritische Spannungswerte. Besonders kritisch sind Spannungserhöhungen im Receiver, insbesondere wenn die Überspannung sehr hoch ist und es zu Durchschlägen kommt. Beim Reduzieren der Last-Impedanz durch Zuschalten einer Teil-Last-Impedanz bricht die im Receiver induzierte Spannung dagegen ein.

Die Last-Impedanz eines Receivers kann sich auch zufällig bzw. ungeplant ändern, beispielsweise bei einem Motor, wenn sich beispielsweise durch das Zerschneiden von Lebensmitteln das benötigte Drehmoment ändert. Diese Änderungen der Last-Impedanz sind nicht Gegenstand der Erfindung, weil dem Receiver prinzipiell nicht bekannt sein kann, wann und in welcher Art eine solche Änderung auftritt. Diese Änderungen treten jedoch typisch langsam auf und sind daher unkritischer als das sprungartige Schalten der Last-Impedanz.

Beim geplanten Schalten von unterschiedlichen Lasten im Receiver kann der Receiver den Transmitter vorab über die anstehende Änderung der Last-Impedanz informieren. Die Änderung der Last-Impedanz kann hierbei relevante Auswirkungen auf den Arbeitspunkt der Leistungsübertragung im Transmitter haben.

Ist eine der Lasten beispielsweise ein Motor, dessen Drehzahl üblicherweise vom Benutzer akustisch wahrgenommen wird, so wird angestrebt, dass sich die Spannung an der bzw. den parallel geschalteten Lasten beim Schalten möglichst wenig ändert.

Das Induzieren einer Überspannung im Receiver sollte in jedem Fall vermieden werden, da mögliche Überschläge auch ein Sicherheitsrisiko darstellen können.

Durch das erfindungsgemäße Vorankündigen des Lastwechsels bzw. der Änderung der Last-Impedanz in einer vorbestimmten Anzahl von Netzhalbwellen der Netzspannung, beispielsweise in der vierten Netzhalbwelle nach einer ankündigenden Datenübertragung, kann der Transmitter seinen alten Leistungs-Sollwert bis zur Netzhalbwelle mit dem Schalten der Last-Impedanz durch den Receiver konstant halten. In der Netzhalbwelle mit dem angekündigten Schalten wird beispielsweise die Regelung im Transmitter unterbrochen und die Arbeitsfrequenz des Ansteuersignals auf eine hohe Frequenz und/oder der Tastgrad des Ansteuersignals auf einen kleinen Wert geschaltet, bzw. die Leistungszufuhr unterbrochen.

Bei der Vorankündigung des Lastwechsels sendet der Receiver beispielsweise einen Kennwert, der seine künftige Last kennzeichnet, beispielsweise Q_PRx, sowie den künftigen Leistungs-sollwert für den Transmitter-Regler. Der Transmitter bestätigt in dem nächsten, bzw. in einem der nächsten Datenübertragungs-Zeitintervalle, dass er die Ankündigung empfangen hat und die Regelung in einem vorbestimmten, nachfolgenden Leistungstransferzeitintervall unterbrechen wird. Mit der Bestätigung durch den Transmitter kann der Receiver nun seinen Lastwechsel vorbereiten. Werden im Receiver kostengünstige Relais zum Schalten der Last verwendet, muss mit Anzugs- und Abfallverzögerung sowie deren Toleranzen gerechnet werden, weshalb das Schalten bevorzugt im übernächsten Leistungstransferzeitintervall bei einem 50 bzw. 60Hz Betrieb erfolgen soll. Ohne Bestätigung durch den Transmitter darf der Receiver den Lastwechsel nicht durchführen. Der Receiver bestätigt nach dem erfolgreichen Schalten seiner Last dem Transmitter die Durchführung. Nach dem Bestätigen des Schaltens der Last kann der Transmitter auf den neuen Sollwert regeln.

Die Receiver-Güte Q_PRx charakterisiert zusammen mit der Resonanzfrequenz des Receivers ausreichend die wirksame Last-Impedanz R_L für die Leistungsübertragung aus Sicht des Transmitters:

$$Q_{PRx} = \frac{2 * \pi * f_s * L\_s}{R\_L}$$

mit Receiver-Resonanzfrequenz $f_s$, Receiver-Induktivität L_s und Lastwiderstand bzw. Last-Impedanz R_L.

Erfindungswesentlich ist das synchronisierte Schalten einer Last (-Impedanz) im Receiver, wodurch sich die Transferfunktion und damit der Arbeitspunkt relevant ändern kann, mit dem Anpassen der Regelung im Transmitter, wobei der Lastsprung vom Receiver angekündigt wird. Der Lastsprung kann einige, beispielsweise 4, Netzhalbwellen nach der Ankündigung durchgeführt werden. Der Transmitter kann in einem, beispielsweise dem nächsten, Datenübertragungs-Zeitintervall, d.h. 2 Netzhalbwellen nach der Ankündigung, den Lastwechsel bestätigen. Der Receiver kann nach dem Erhalt der Transmitterbestätigung vorzugsweise in der übernächsten Netzhalbwelle eine Last zu- oder abschalten. Der Receiver kann anschließend, vorzugsweise in der nächstfolgenden Netzhalbwelle, das erfolgreiche Schalten bestätigen, damit der Transmitter seine Regelung mit dem neuen Arbeitspunkt fortsetzen kann.

Der Transmitter arbeitet bis zu der Netzhalbwelle direkt vor dem Lastwechsel mit den Sollwerten der ersten Last, in der Umschalt-Netzhalbwelle bzw. bis zur Bestätigung des Receivers mit einem vordefinierten, unkritischen Arbeitspunkt ohne Regelung, beispielsweise einem Arbeitspunkt mit hoher Arbeitsfrequenz und/oder kleinem Tastgrad oder unterbrochener Leistungsübertragung, bevor nach der Bestätigung des erfolgreichen Schaltens der Last die Leistungsübertragung wieder mit einer Regelung mit angepassten Regelungsparametern auf den Sollwert fortgesetzt werden kann.

Die Erfindung wird nachfolgend unter Bezugnahme auf die Zeichnungen detailliert beschrieben. Hierbei zeigt:

Fig. 1 ein Blockschaltbild eines Systems mit einer Vorrichtung zum drahtlosen Übertragen von Energie und einem zugehörigen elektrischen Verbraucher,

Fig. 2 hoch schematisch ein Schaltbild einer Schalteinrichtung zur Veränderung einer Last-Impedanz des in Fig. 1 gezeigten elektrischen Verbrauchers, und

Fig. 3 einen zeitlichen Ablauf des erfindungsgemäßen Verfahrens.

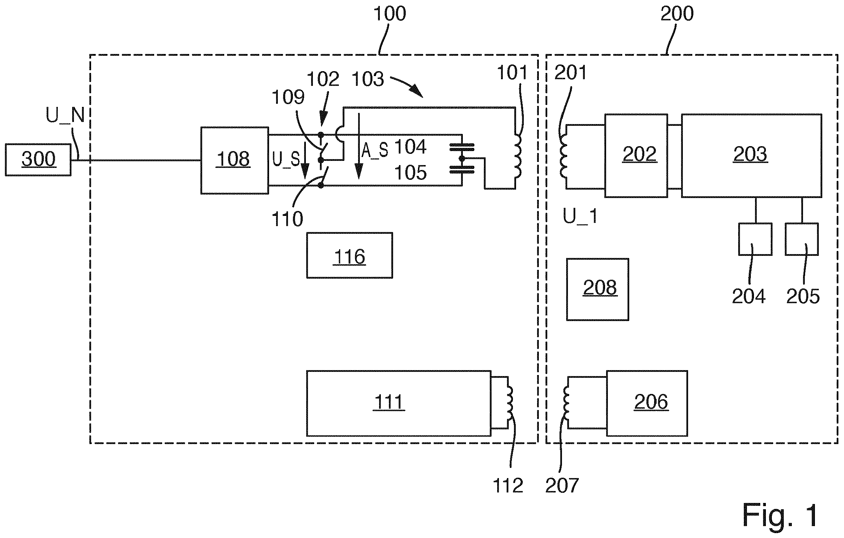

Fig. 1 zeigt ein Blockschaltbild eines Systems aufweisend eine Vorrichtung 100 zum drahtlosen Übertragen von Energie in Richtung eines elektrischen Verbrauchers 200 mittels induktiver Kopplung und einen mittels der Vorrichtung 100 versorgten elektrischen Verbraucher 200.

Die Vorrichtung 100 weist einen Gleichrichter 108 zum Erzeugen einer Gleichspannung U_S aus einer herkömmlichen einphasigen Netzspannung U_N eines Wechselspannungsnetzes 300 auf.

Die Vorrichtung 100 weist weiter einen aus der Gleichspannung U_S gespeisten Wechselrichter 102 mit Schaltmitteln 109 und 110 auf, der dazu ausgebildet ist, ein pulsweitenmoduliertes Ansteuersignal A_S zu erzeugen.

Die Vorrichtung 100 weist weiter Kondensatoren 104, 105 auf, die in Serie zwischen Ausgangsanschlüsse des Gleichrichters 108 bzw. die Speisespannung U_S eingeschleift sind.

Die Vorrichtung 100 weist weiter eine mittels des pulsweitenmodulierten Ansteuersignals A_S angesteuerte Leistungsspule 101 auf, wobei die Kondensatoren 104, 105 und die Leistungsspule 101 derart verschaltet sind, dass sie einen Schwingkreis 103 bilden. Hierzu ist ein Anschluss der Leistungsspule 101 mit einem Verbindungsknoten von Halbleiterschaltmitteln 109, 110 des Wechselrichters 102 elektrisch verbunden und ein anderer Anschluss der Leistungsspule 101 ist mit einem Verbindungsknoten der Kondensatoren 104, 105 elektrisch verbunden.

Es versteht sich, dass die dargestellte Wechselrichter- und Schwingkreistopologie lediglich exemplarisch ist. Es kann im Rahmen der vorliegenden Erfindung beispielsweise ein Wechselrichter mit einer Vollbrücke verwendet werden, es können anders verschaltete Serien- oder Parallelschwingkreise verwendet werden, usw.

Mittels der Leistungsspule 101 wird zum Übertragen der Energie ein magnetisches Wechselfeld erzeugt.

Die Vorrichtung 100 weist weiter eine Kommunikationseinrichtung 111 auf, die mit einer Kommunikationsspule 112 gekoppelt ist. Die Kommunikationseinrichtung 111 in Verbindung mit der Kommunikationsspule 112 dient zum bidirektionalen Datenaustausch mit dem elektrischen Verbraucher 200.

Die Vorrichtung 100 weist weiter einen Regler 116 auf, der dazu ausgebildet ist, eine von dem Wechselrichter 102 abgegebene Leistung auf einen vorgebbaren Sollwert zu regeln, wobei als Stellgröße eine Frequenz und/oder ein Tastgrad des Ansteuersignals A_S dient/dienen.

Der elektrische Verbraucher 200 weist eine Leistungsspule 201 und einen nachgeschalteten passiven LC-Resonanzkreis 202 auf.

Der elektrische Verbraucher 200 weist weiter eine Schalteinrichtung 203 zur Veränderung einer Last-Impedanz des elektrischen Verbrauchers 200 auf. Als zu- bzw. abschaltbare Lasten sind exemplarisch die Elemente 204 und 205 dargestellt.

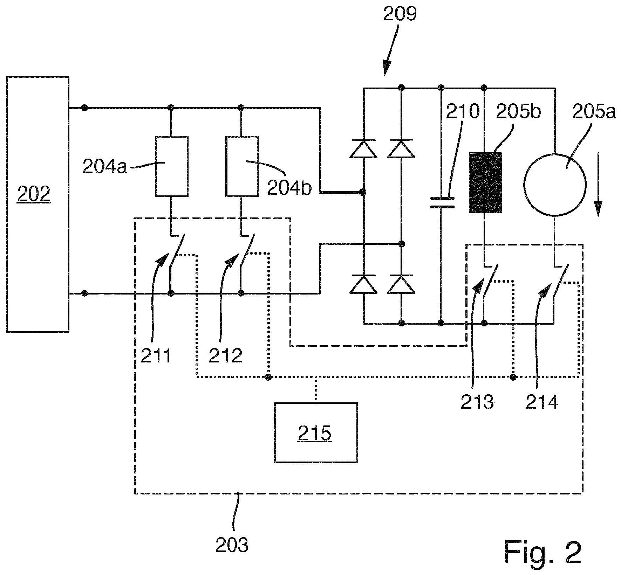

Fig. 2 zeigt hoch schematisch ein Schaltbild der Schalteinrichtung 203 und von deren Peripherie. Die Schalteinrichtung 203 weist Schaltmittel 211, 212, 213 und 214 auf, die von einer Logikeinheit 215 zum Verändern der Last-Impedanz angesteuert werden. Die Schaltmittel 211 und 212 schalten ohmsche Lasten 204a bzw. 204b, die direkt mit einer hochfrequenten Spannung aus dem LC-Resonanzkreis 202 versorgt sind. Das Schaltmittel 213 schaltet eine induktive Last 205b und das Schaltmittel 214 schaltet einen Elektromotor 205a. Ein optionaler Gleichrichter 209 mit einem nachgeschalteten Kondensator 210 richtet die hochfrequente Ausgangsspannung des LC-Resonanzkreises 202 gleich, wobei die derart gleichgerichtete Spannung zur Versorgung des Elektromotors 205a und der induktiven Last 205b dient.

Der elektrische Verbraucher 200 weist weiter eine Kommunikationseinrichtung 206 auf, die mit einer Kommunikationsspule 207 gekoppelt ist. Die Kommunikationseinrichtung 206 in Verbindung mit der Kommunikationsspule 207 dient zum bidirektionalen Datenaustausch mit der Vorrichtung 100.

Der elektrische Verbraucher 200 weist weiter eine Steuereinrichtung 208 auf, die den Betrieb des elektrischen Verbrauchers 200 steuert. Die Steuereinrichtung 208 steht in Datenverbindung mit der Schalteinrichtung 203 und der Kommunikationseinrichtung 206. Die Steuereinrichtung 208 steuert unter anderem das synchronisierte Verändern der Last-Impedanz durch geeignete Ansteuerung der Schalteinrichtung 203 und Kommunikation mit der Vorrichtung 100.

Erfindungsgemäß wird der Betrieb der Vorrichtung 100 und der Betrieb des elektrischen Verbrauchers 200 derart synchronisiert, dass während einer Veränderung der Last-Impedanz des elektrischen Verbrauchers 200 eine Übergangs-Frequenz und/oder ein Übergangs-Tastgrad des pulsweitenmodulierten Ansteuersignals A_S derart eingestellt wird/werden, dass eine in dem elektrischen Verbraucher 200 bewirkte bzw. induzierte Spannung U_1 einen vorgegebenen Schwellenwert von 600 V als Spitzenspannung nicht überschreitet.

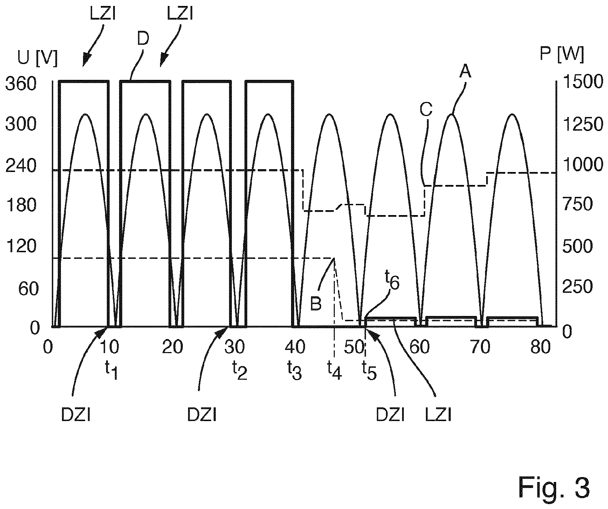

Der erfindungsgemäße Betrieb des Systems wird nachfolgend unter Bezugnahme auf Fig. 3 detailliert beschrieben.

Fig. 3 zeigt mit "A" bezeichnet zunächst einen zeitlichen Verlauf der Speisespannung U_S als eine Folge von gleichgerichteten Netzhalbwellen. Weiter zeigt Fig. 3 mit "B" bezeichnet einen zeitlichen Verlauf der Last-Impedanz. Weiter zeigt Fig. 3 mit "C" bezeichnet einen Effektivwert der Last-Spannung U_1. Schließlich zeigt Fig. 3 mit "D" bezeichnet einen zeitlichen Verlauf des Sollwerts des Reglers 116, der die von dem Wechselrichter 102 abzugebende Leistung bezeichnet.

Während der ersten drei Netzhalbwellen beträgt der Leistungs-Sollwert während Leistungsübertragungszeitintervallen LZI 1500 Watt. Es stellt sich ein Effektivwert der Last-Spannung U_1 von 230 V ein. Eine Datenübertragung findet gegebenenfalls während Datenübertragungszeitintervallen DZI um einen Nulldurchgang der Netzspannung U_N statt.

Zum Zeitpunkt t1 sendet der elektrische Verbraucher 200 zur Vorrichtung 100 Daten, wobei die Daten anzeigen, dass der elektrische Verbraucher 200 eine Veränderung seiner elektrischen Last-Impedanz plant.

Zum Zeitpunkt t2 sendet die Vorrichtung 100 zum elektrischen Verbraucher 100 Daten, wobei die Daten anzeigen, dass die Daten des elektrischen Verbrauchers 200 von der Vorrichtung 100 empfangen worden sind und die Vorrichtung 100 das Verändern der Last-Impedanz bestimmungsgemäß unterstützen wird.

Nach einer Netzhalbwelle zum Zeitpunkt t3 deaktiviert die Vorrichtung 100 ihren Regler 116 und stellt eine Übergangs-Frequenz und/oder einen Übergangs-Tastgrads derart ein, dass der Effektivwert der Spannung U_1 Last-Impedanz-unabhängig immer kleiner als ein Schwellenwert von 230 V bleibt.

Zu einem Zeitpunkt t4 ändert der elektrische Verbraucher 200 seine Last-Impedanz.

Zu einem Zeitpunkt t5 überträgt der elektrische Verbraucher 200 Daten zur Vorrichtung 100, wobei die Daten anzeigen, dass der elektrische Verbraucher 200 seine Last-Impedanz verändert hat.

Ab einem Zeitpunkt t6 aktiviert die Vorrichtung 100 ihren Regler 116 basierend auf einem Leistungs-Sollwert von 50 Watt, womit die Last-Impedanz-Änderung abgeschlossen ist.

**Patentansprüche**

1. Verfahren zum Betreiben eines Systems aufweisend eine Vorrichtung (100) zum drahtlosen Übertragen von Energie in Richtung eines elektrischen Verbrauchers (200) mittels induktiver Kopplung und einen elektrischen Verbraucher (200),

- wobei die Vorrichtung (100) aufweist:

- einen Gleichrichter (108) zum Erzeugen einer Gleichspannung (U_S) aus einer Netzspannung (U_N),
- einen aus der Gleichspannung (U_S) gespeisten Wechselrichter (102), der dazu ausgebildet ist, ein pulsweitenmoduliertes Ansteuersignal (A_S) zu erzeugen,
- eine mittels des pulsweitenmodulierten Ansteuersignals (A_S) angesteuerte Leistungsspule (101), mittels der zum Übertragen der Energie ein magnetisches Wechselfeld erzeugbar ist,
- eine Kommunikationseinrichtung (111), die dazu ausgebildet ist, Daten bidirektional mit dem elektrischen Verbraucher (200) auszutauschen, und
- einen Regler (116), der dazu ausgebildet ist, eine von dem Wechselrichter (102) abgegebene Leistung auf einen vorgebbaren Sollwert zu regeln, und

- wobei der elektrische Verbraucher (200) aufweist:

- eine Schalteinrichtung (203) zur Veränderung einer Last-Impedanz des elektrischen Verbrauchers (200), und
- eine Kommunikationseinrichtung (206), die dazu ausgebildet ist, Daten bidirektional mit der Vorrichtung (100) auszutauschen,

wobei das Verfahren die Schritte aufweist:

- Synchronisieren des Betriebs der Vorrichtung (100) und des Betriebs des elektrischen Verbrauchers (200) derart, dass während einer Veränderung der Last-Impedanz des elektrischen Verbrauchers (200) eine Übergangs-Frequenz und/oder ein Übergangs-Tastgrad des pulsweitenmodulierten Ansteuersignals (A_S) derart eingestellt wird/werden, dass in dem elektrischen Verbraucher (200) bewirkte Spannungen (U_1) und/oder Ströme vorgegebene Schwellenwerte nicht überschreiten und/oder unterschreiten.

2. Verfahren nach Anspruch 1, **dadurch gekennzeichnet, dass**

- während der Veränderung der Last-Impedanz des elektrischen Verbrauchers (200) der Regler (116) deaktiviert wird.

3. Verfahren nach einem der vorhergehenden Ansprüche, **dadurch gekennzeichnet, dass**

- die Übergangs-Frequenz und/oder der Übergangs-Tastgrad derart eingestellt wird/werden, dass eine in dem elektrischen Verbraucher (200) bewirkte Spannung (U1) unabhängig von der Last-Impedanz des elektrischen Verbrauchers (200) kleiner als oder gleich wie eine Nennspannung des elektrischen Verbrauchers (200) bleibt.

4. Verfahren nach einem der vorhergehenden Ansprüche, **dadurch gekennzeichnet, dass**

- für Kopplungsfaktoren zwischen der Vorrichtung (100) und dem elektrischen Verbraucher (200) von ≤ 0,45 die Übergangs-Frequenz ≥ 40 kHz eingestellt wird, und
- für Kopplungsfaktoren zwischen der Vorrichtung (100) und dem elektrischen Verbraucher (200) von > 0,45 die Übergangs-Frequenz ≥ 50 kHz eingestellt wird.

5. Verfahren nach einem der Ansprüche 1 bis 3, **dadurch gekennzeichnet, dass**

- die Übergangsfrequenz Null Hz beträgt.

6. Verfahren nach einem der vorhergehenden Ansprüche, **gekennzeichnet durch** die Schritte

a) Übertragen von Daten vom elektrischen Verbraucher (200) zur Vorrichtung (100), wobei die Daten anzeigen, dass der elektrische Verbraucher (200) eine Veränderung seiner elektrischen Last-Impedanz plant,
b) danach, Übertragen von Daten von der Vorrichtung (100) zum elektrischen Verbraucher (100), wobei die Daten anzeigen, dass die Daten des elektrischen Verbrauchers (200) von der Vorrichtung (100) empfangen worden sind, und Einstellen der Übergangs-Frequenz und/oder des Übergangs-Tastgrads,
c) danach, Ändern der Last-Impedanz des elektrischen Verbrauchers (200) und Übertragen von Daten vom elektrischen Verbraucher (200) zur Vorrichtung (100), wobei die Daten anzeigen, dass der elektrische Verbraucher (200) seine Last-Impedanz verändert hat, und
d) danach, Regeln einer von dem Wechselrichter (102) abgegebenen elektrischen Leistung auf einen stationären Sollwert.

7. Verfahren nach Anspruch 6, **dadurch gekennzeichnet, dass**

- im Schritt a) die vom elektrischen Verbraucher (200) zur Vorrichtung (100) übertragenen Daten zusätzlich einen gewünschten Sollwert enthalten, wobei im Schritt d) der stationäre Sollwert in Abhängigkeit von dem gewünschten Sollwert eingestellt wird, insbesondere dem gewünschten Sollwert entspricht.

8. Verfahren nach Anspruch 6 oder 7, **dadurch gekennzeichnet, dass**

- im Schritt a) die vom elektrischen Verbraucher (200) zur Vorrichtung (100) übertragenen Daten zusätzlich Informationen enthalten, die die zukünftige Last-Impedanz kennzeichnen.

9. Verfahren nach einem der vorhergehenden Ansprüche, **dadurch gekennzeichnet, dass**

- Daten zwischen dem elektrischen Verbraucher (200) und der Vorrichtung (100) in einem Zeitbereich um einen Nulldurchgang der Netzspannung herum übertragen werden.

10. System, aufweisen

- eine Vorrichtung (100) zum drahtlosen Übertragen von Energie in Richtung eines elektrischen Verbrauchers (200) mittels induktiver Kopplung, und
- einen elektrischen Verbraucher (200),

    - wobei die Vorrichtung (100) aufweist:

        - einen Gleichrichter (108) zum Erzeugen einer Gleichspannung ($U\_S$) aus einer Netzspannung ($U\_N$),
        - einen aus der Gleichspannung ($U\_S$) gespeisten Wechselrichter (102), der dazu ausgebildet ist, ein pulsweitenmoduliertes Ansteuersignal ($A\_S$) zu erzeugen,
        - eine mittels des pulsweitenmodulierten Ansteuersignals ($A\_S$) angesteuerte Leistungsspule (101), mittels der zum Übertragen der Energie ein magnetisches Wechselfeld erzeugbar ist,
        - eine Kommunikationseinrichtung (111), die dazu ausgebildet ist, Daten bidirektional mit dem elektrischen Verbraucher (200) auszutauschen, und
        - einen Regler (116), der dazu ausgebildet ist, eine von dem Wechselrichter (102) abgegebene Leistung auf einen vorgebbaren Sollwert zu regeln, und

    - wobei der elektrische Verbraucher (200) aufweist:

        - eine Schalteinrichtung (203) zur Veränderung einer Last-Impedanz des elektrischen Verbrauchers (200), und
        - eine Kommunikationseinrichtung (206), die dazu ausgebildet ist, Daten bidirektional mit der Vorrichtung (100) auszutauschen,

- wobei die Vorrichtung (100) und der elektrische Verbraucher dazu ausgebildet sind, ein Verfahren nach einem der vorhergehenden Ansprüche auszuführen.

Fig. 1

209

210  205b  205a

204a  204b

202

211  212

213  214

215

203

Fig. 2

Fig. 3

Europäisches
Patentamt

European
Patent Office

Office européen
des brevets

**EUROPÄISCHER RECHERCHENBERICHT**

**Nummer der Anmeldung**

**EP 22 20 1302**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 790 159 A1 (KONINKLIJKE PHILIPS NV [NL]) 10. März 2021 (2021-03-10) | 1-8,10 | INV.<br>H02J50/12<br>H02J50/80 |
| Y | * Absätze [0050] - [0086], [0117], [0102], [0120] - [0130]; Abbildungen 1-6 * | 9 | |
| | ----- | | |
| X | DE 10 2019 202991 A1 (EGO ELEKTRO-GERÄTEBAU GMBH [DE]) 10. September 2020 (2020-09-10) | 1-8,10 | |
| Y | * Absätze [0007] - [0056]; Ansprüche 1, 2; Abbildung 1 * | 9 | |
| | ----- | | |
| Y | DE 10 2019 214047 A1 (BOSCH GMBH ROBERT [DE]) 18. März 2021 (2021-03-18) * Absätze [0002] - [0012] * | 9 | |
| | ----- | | |

**RECHERCHIERTE SACHGEBIETE (IPC)**

**H02J**

Der vorliegende Recherchenbericht wurde für alle Patentansprüche erstellt

| Recherchenort | Abschlußdatum der Recherche | Prüfer |
|---|---|---|
| München | 14. März 2023 | Telega, Pawel |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 20 1302

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-03-2023

| Im Recherchenbericht angeführtes Patentdokument | Datum der Veröffentlichung | Mitglied(er) der Patentfamilie | Datum der Veröffentlichung |
|---|---|---|---|
| EP 3790159 A1 | 10-03-2021 | BR 112022004229 A2 | 31-05-2022 |
| | | CN 114391208 A | 22-04-2022 |
| | | EP 3790159 A1 | 10-03-2021 |
| | | EP 4029110 A1 | 20-07-2022 |
| | | JP 2022547394 A | 14-11-2022 |
| | | KR 20220058952 A | 10-05-2022 |
| | | US 2022337093 A1 | 20-10-2022 |
| | | WO 2021048019 A1 | 18-03-2021 |
| DE 102019202991 A1 | 10-09-2020 | CN 111669855 A | 15-09-2020 |
| | | DE 102019202991 A1 | 10-09-2020 |
| | | EP 3706510 A1 | 09-09-2020 |
| | | KR 20200106853 A | 15-09-2020 |
| | | US 2020287421 A1 | 10-09-2020 |
| DE 102019214047 A1 | 18-03-2021 | CN 114402502 A | 26-04-2022 |
| | | DE 102019214047 A1 | 18-03-2021 |
| | | EP 4032167 A1 | 27-07-2022 |
| | | US 2022376560 A1 | 24-11-2022 |
| | | WO 2021052672 A1 | 25-03-2021 |

EPO FORM P0461

Für nähere Einzelheiten zu diesem Anhang : siehe Amtsblatt des Europäischen Patentamts, Nr.12/82